# EUROPÄISCHE PATENTSCHRIFT

(11) **EP 3 989 408 B1**
(45) Veröffentlichungstag und Bekanntmachung des Hinweises auf die Patenterteilung: **27.05.2026**
(21) Anmeldenummer: 21202372.5
(22) Anmeldetag: 13.10.2021
(51) Int. Cl.: H02K 3/52, H02K 3/38, H02K 9/22, H02K 1/24

(54) **ROTOR FÜR EINE ELEKTRISCHE MASCHINE, ELEKTRISCHE MASCHINE FÜR EIN FAHRZEUG UND VERFAHREN ZUR HERSTELLUNG EINES ROTORS FÜR EINE ELEKTRISCHE MASCHINE**
ROTOR FOR AN ELECTRIC MACHINE, ELECTRIC MACHINE FOR A VEHICLE AND METHOD FOR MANUFACTURING A ROTOR FOR AN ELECTRIC MACHINE
ROTOR POUR UNE MACHINE ÉLECTRIQUE, MACHINE ÉLECTRIQUE POUR UN VÉHICULE ET PROCÉDÉ DE FABRICATION D'UN ROTOR POUR UNE MACHINE ÉLECTRIQUE

(30) Priorität: 23.10.2020 DE 102020127928
(43) Veröffentlichungstag der Anmeldung: 27.04.2022
(73) Patentinhaber: Valeo eAutomotive Germany GmbH, 91056 Erlangen (DE)
(72) Erfinder: Dotz, Boris, 97616 Bad Neustadt a.d.Saale (DE); Bach, Regina, 97616 Bad Neustadt a.d.Saale (DE)
(74) Vertreter: Valeo Powertrain Systems

(56) Entgegenhaltungen:
- DE-A1- 102011 121 793
- DE-A1- 102015 213 593
- DE-A1- 102018 128 521
- JP-A- 2018 016 669
- US-A1- 2018 109 170

## Beschreibung

Die vorliegende Erfindung betrifft einen Rotor für eine elektrische Maschine. Daneben betrifft die Erfindung eine elektrische Maschine für ein Fahrzeug und ein Verfahren zur Herstellung eines Rotors für eine elektrische Maschine.

Die DE 10 2004 062 162 A1 offenbart eine elektrische Maschine mit einem Schenkelpolläufer, der eine Erregerwicklung aufweist. Der Schenkelpolläufer weist Pole auf, zwischen denen sich in axialer Richtung verlaufende Pollücken befinden.

Die DE 10 2011 121793 A1 offenbart eine weitere elektrische Maschine mit einem Schenkelpolläufer.

Bei Rotoren, die mit einer Erregerwicklung umwickelte Rotorschenkel aufweisen, wirken während des Betriebs erhebliche Radialkräfte, wie beispielsweise Fliehkräfte. Diese Radialkräfte ziehen insbesondere an Wickelköpfen der Erregerwicklungen. Damit der Rotor wegen dieser Radialkräfte nicht nur eingeschränkt betrieben werden kann, wurde bereits vorgeschlagen, den Rotor vollständig zu vergie-ßen oder zusätzliche Bauteile, wie Armierungsringe oder Befestigungen mit Schrauben und Zugankern, anzubringen. Derartige Maßnahmen sind jedoch teuer, fertigungstechnisch aufwendig und kompliziert zu handhaben.

Der Erfindung liegt mithin die Aufgabe zugrunde, eine verbesserte Möglichkeit zum Betrieb eines Rotors anzugeben.

Zur Lösung dieser Aufgabe wird erfindungsgemäß ein Rotor für eine elektrische Maschine nach Anspruch 1 vorgeschlagen.

Die Erfindung beruht auf der Überlegung, die topfförmige Endkappe an den Stirnseiten des Rotors anzuordnen und die Zwischenräume zwischen den Erregerwicklungen und der Endkappe mit der Vergussmasse zu vergießen bzw. auszugleiten. Dadurch kann die Vergussmasse stirnseitige Enden der Erregerwicklung, die sogenannten Wickelköpfe, berühren und so für eine verbesserte Formstabilität sorgen. Mit besonderem Vorteil wird darüber hinaus durch die Vergussmasse eine thermische Kopplung der Wickelköpfe und der Endkappe realisiert, wodurch die Wärmeabfuhr aus dem Rotorkern und aus den Erregerwicklungen erhöht wird. So kann die Funktion des Motors auch bei hohen mechanischen und thermischen Belastungen gewährleistet werden und ein Betrieb mit hohen Drehzahlen ermöglicht werden.

Der Rotorkern des erfindungsgemäßen Rotors kann durch eine Vielzahl von axial geschichteten und drehfest miteinander verbundenen Einzelblechen ausgebildet sein. Der Rotorkern kann dementsprechend auch als Blechpaket bezeichnet werden. Ein jeweiliger mit einer Erregerwicklung umwickelter Rotorschenkel kann einen Pol des Rotors ausbilden. Es wird besonders bevorzugt, wenn jeder Rotorschenkel radial außen einen Polschuh aufweist. Der Polschuh kann sich in Umfangsrichtung weiter erstrecken, als solche Bereiche des Rotorschenkels, die mit der Erregerwicklung umwickelt sind. In bevorzugter Ausgestaltung weist der erfindungsgemäße Rotor wenigstens zwei, bevorzugt wenigstens vier, besonders bevorzugt wenigstens acht Rotorschenkel und/oder höchstens 20, bevorzugt höchstens 16, besonders bevorzugt höchstens zwölf, Rotorschenkel auf. Es wird besonders bevorzugt, wenn der Rotor genau acht Rotorschenkel aufweist.

Die Endkappe weist vorzugsweise eine plattenartige Grundfläche auf, in welcher die Durchgangsöffnung für die Welle ausgebildet ist. An der Grundfläche kann rotorkernseitig ein in Umfangsrichtung umlaufender Kragen ausgebildet sein. Der Kragen ist bevorzugt am radial äußeren Rand der Grundfläche ausgebildet. Bevorzug ist die Endkappe aus einem Kunststoff gebildet.

Zweckmäßigerweise berührt die Vergussmasse im Zwischenraum sowohl die Erregerwicklung als auch die Endkappe. Die Zwischenräume können voneinander separiert sein, sodass die in den Zwischenräumen angeordneten Vergussmassen voneinander separiert sind bzw. nicht miteinander in Verbindung stehen. Die Zwischenräume und die darin angeordneten Vergussmassen können aber auch zusammenhängend sein.

Bei dem erfindungsgemäßen Rotor kann eine jeweilige Erregerwicklung einen der Zwischenräume axial innen begrenzen. Alternativ oder zusätzlich kann die Endkappe einen jeweiligen Zwischenraum axial außen begrenzen. Der Begriff "axial innen" meint dabei zu einem axialen Mittelpunkt des Rotorkerns hinweisend. Dementsprechend meint "axial außen" von einem axialen Mittelpunkt des Rotorkerns wegweisend.

Vorzugsweise begrenzt die Endkappe einen jeweiligen Zwischenraum radial außen. Insbesondere der Kragen der Endkappe kann einen jeweiligen Zwischenraum radial außen begrenzen. Außerdem kann ein jeweiliger Zwischenraum radial innen durch die Welle begrenzt sein.

Es wird ferner bevorzugt, wenn auf beiden Stirnseiten des Rotorkerns eine Endkappe und die Zwischenräume mit der darin angeordneten Vergussmasse vorgesehen sind. Alle Ausführungen zu einer der Stirnseiten lassen sich auf die andere der Stirnseiten übertragen.

In bevorzugter Ausgestaltung des erfindungsgemäßen Rotors ist ferner vorgesehen, dass die Vergussmasse die Welle thermisch leitfähig kontaktiert. Unter "thermisch leitfähig kontaktieren" ist insbesondere zu verstehen, dass die Vergussmasse die Welle berührt und/oder direkt mit ihr verbunden ist. So kann ein thermischer Pfad vom Wickelkopf zur Welle ausgebildet werden, um die Wärmeabfuhr weiter zu erhöhen.

Mit Vorteil kann bei dem erfindungsgemäßen Rotor vorgesehen sein, dass die Endkappe rotorkernseitig eine Oberflächenkontur aufweist, die einen jeweiligen Zwischenraum in Umfangsrichtung, insbesondere beidseitig, begrenzt. Die Endkappe und die Zwischenräume werden dadurch an die Form der Wickelköpfe angepasst. Die Oberflächenkontur erstreckt sich vorzugsweise von der Grundfläche der Endkappe nach axial innen. Die Oberflächenkontur kann radial außen in den Kragen übergehen.

Der erfindungsgemäße Rotor weist ferner eine Abschlussvorrichtung auf, die stirnseitig am Rotorkern angeordnet ist und Abschlusselemente aufweist, die sich jeweils zwischen dem Rotorschenkel und der Erregerwicklung erstrecken. Mit anderen Worten sind sowohl der Rotorschenkel als Abschlusselement durch eine jeweilige Erregerwicklung umwickelt. Die Anzahl der Abschlusselemente kann dabei der Anzahl der Rotorschenkel entsprechen. Die Abschlussvorrichtung ermöglicht insbesondere eine materialschonende Ausbildung der Wickelköpfe, da diese nicht direkt auf dem Rotorkern aufliegen, sondern axial außen auf den Abschlusselementen. Die Abschlusselemente sind daher in ihren von der Erregerwicklung umwickelte Bereichen bevorzugt abgerundet ausgebildet. Vorzugsweise umfasst jedes Abschlusselement radial außen einen Vorsprung der sich wenigstens soweit axial nach außen erstreckt wie die Erregerwicklung. Dadurch kann eine Eintiefung zur Aufnahme der Erregerwicklung ausgebildet werden.

In vorteilhafter Weiterbildung übergreift die Endkappe die Abschlussvorrichtung radial außen. Dadurch können die Zwischenräume radial außen zuverlässig abgeschlossen werden. Dies verhindert insbesondere ein Austreten der Vergussmasse während ihres Einführens in die Zwischenräume. Die Endkappe übergreift insbesondere radial außen einen jeweiligen Vorsprung der Abschlusselemente.

Es kann ferner vorgesehen sein, dass die Endkappe durch Rastelemente an zumindest einem Teil der Abschlusselemente befestigt ist. Dadurch wird eine zuverlässige Befestigung der Endkappe am Abschlusselemente realisiert. Vorzugsweise sind die Rastelemente durch gegengleiche Rastnasen am Kragen der Endkappe und am Vorsprung des Abschlusselements ausgebildet.

Um die wirksame Wärmeübertragungsfläche der Vergussmasse weiter zu erhöhen wird es bevorzugt, wenn die Abschlussvorrichtung eine Oberflächenstruktur aufweist, die durch axiale Eintiefungen ausgebildet ist, wobei sich die Vergussmasse in die Eintiefungen erstreckt. Die Oberflächenstruktur kann beispielsweise durch eine Perforation ausgebildet sein. Dazu können, vorzugsweise axial nach innen weisende, Bohrungen in der Abschlussvorrichtung ausgebildet sein. Alternativ oder zusätzlich kann die Oberflächenstruktur durch eine in Umfangsrichtung verlaufende Nut ausgebildet sein.

Die Abschlussvorrichtung weist ferner einen ringförmigen Körper auf, der die Durchgangsöffnung für die Welle umschließt und von dem sich die Abschlusselemente radial nach außen erstrecken. Der ringförmige Körper kann sich axial weiter nach außen erstrecken als die Erregerwicklungen.

Erfindungsgemäß ist die Oberflächenstruktur im ringförmigen Körper ausgebildet.

Bevorzugt weist der erfindungsgemäße Rotor ferner eine der Anzahl der Rotorschenkel entsprechende Anzahl von Trennelementen auf, die jeweils zwischen benachbarten Paaren von Rotorschenkeln angeordnet sind. Die Trennelemente, auch als Spulentrenner bezeichnet, sind vorzugsweise keilförmig ausgebildet, wobei ihre Spitze radial nach innen weist. Die Trennelemente erstrecken sich bevorzugt vollständig axial entlang der Erregerwicklungen. Nach radial außen erstrecken sich die Trennelemente vorzugsweise nicht weiter als die Rotorschenkel, insbesondere höchstens bis zur radial innersten Stelle der Polschuhe. Die Trennelemente erstrecken sich axial bevorzugt weiter nach außen als die Erregerwicklungen.

Es ist vorteilhaft, wenn ein jeweiliges Trennelement zwei benachbarte Zwischenräume jeweils in Umfangsrichtung einseitig begrenzt. Alternativ oder zusätzlich kann vorgesehen sein, dass ein jeweiliges Trennelement auf der Endkappe, insbesondere auf deren Oberflächenkontur, aufliegt. Die Begrenzung der Zwischenräume in Umfangsrichtung kann dabei gemeinsam durch die Trennelemente und die Endkappe realisiert sein.

In bevorzugter Ausgestaltung des erfindungsgemäßen Rotors ist die Vergussmasse eine ausgehärtete Wärmeleitpaste. Dies ermöglicht eine besonders einfache Befüllung der Zwischenräume mit der Vergussmasse, da die Wärmeleitpaste in ihrem zu verarbeitenden Zustand zähflüssig ist. Die Wärmeleitpaste lässt sich so einerseits leicht in den Zwischenräumen verteilen. Andererseits ist ihre Viskosität so hoch, dass die Gefahr einer Verschmutzung während des Befüllens durch austretende Wärmeleitpaste reduziert werden kann.

Die der Erfindung zugrunde liegende Aufgabe wird ferner durch eine elektrische Maschine für ein Fahrzeug gelöst, aufweisend einen Stator und einen drehbar innerhalb des Stators gelagerten erfindungsgemäßen Rotor. Die elektrische Maschine ist insbesondere ein Elektromotor. Die elektrische Maschine ist vorzugsweise elektrisch erregt, insbesondere fremderregt. Die elektrische Maschine ist bevorzugt zum Antreiben des Fahrzeugs eingerichtet, insbesondere Teil eines Antriebsstrangs für ein elektrisch antreibbares Fahrzeug, wie ein batterieelektrisches Fahrzeug (BEV) oder ein Hybridfahrzeug.

Die der Erfindung liegende Aufgabe wird ferner gelöst durch ein Verfahren zur Herstellung eines Rotors für eine elektrische Maschine nach Anspruch 12.

Bei Verwendung der Vergussmasse mit der vorgenannten dynamischen Viskosität ist eine für ein fertigungsfreundliches Befüllen der Zwischenräume förderliche Zähigkeit gegeben.

Sämtliche Ausführungen zum erfindungsgemäßen Rotor lassen sich analog auf das erfindungsgemäße Verfahren übertragen, sodass auch mit diesem die zuvor genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine geschnittene Darstellung eines ersten Ausführungsbeispiels des erfindungsgemäßen Rotors;
- Fig. 2: eine perspektivische Detaildarstellung des Rotorkerns, der Erregerwicklungen, der Abschlussvorrichtung und der Trennelemente des ersten Ausführungsbeispiels;
- Fig. 3: eine geschnittene Detailansicht des ersten Ausführungsbeispiels im Bereich eines der Zwischenräume;
- Fig. 4: eine geschnittene Detailansicht eines zweiten Ausführungsbeispiels des erfindungsgemäßen Rotors im Bereich eines der Zwischenräume; und
- Fig. 5: eine Prinzipskizze eines Fahrzeugs mit einem Ausführungsbeispiel der erfindungsgemäßen elektrischen Maschine.

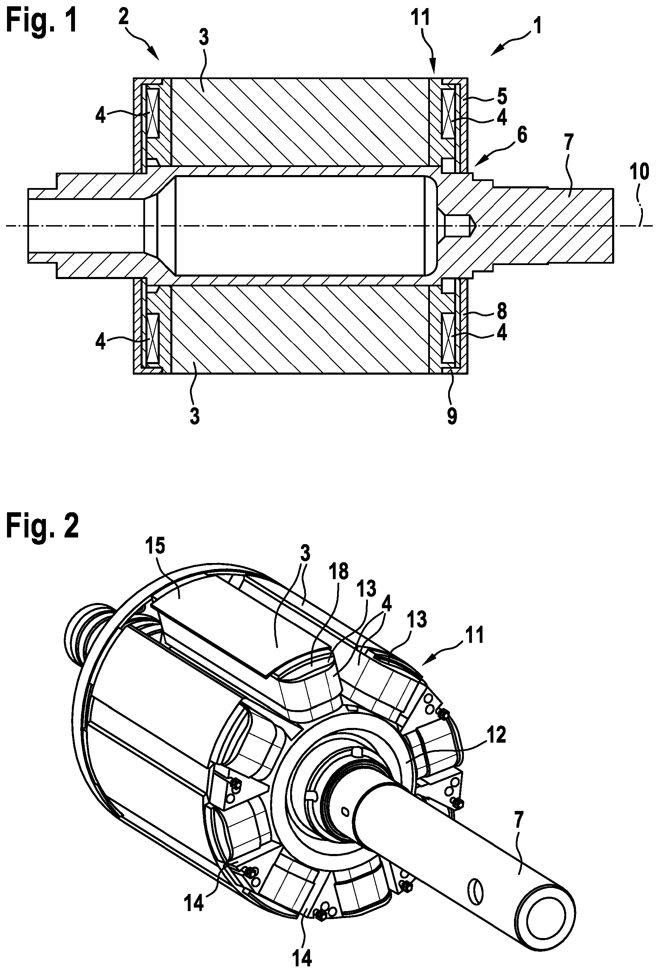

Fig. 1 seine geschnittene Darstellung eines ersten Ausführungsbeispiels eines Rotors 1.

Der Rotor 1 weist einen Rotorkern 2 mit einer Vielzahl von sich radial nach außen erstreckenden Rotorschenkeln 3 auf, der als Blechpaket ausgebildet sein kann. Im vorliegenden Ausführungsbeispiel sind exemplarisch acht Rotorschenkel 3 vorgesehen. Daneben umfasst der Rotor 1 eine der Anzahl der Rotorschenkel 3 entsprechende Anzahl von Erregerwicklungen 4, die jeweils um die Rotorschenkel 3 gewickelt sind.

Außerdem umfasst der Rotor 1 eine topfförmige Endkappe 5, die die Erregerwicklungen 4 stirnseitig abdeckt und eine Durchgangsöffnung 6 für eine Welle 7 aufweist. Die Endkappe 5 kann dazu eine Grundfläche 8, in welcher die Durchgangsöffnung 6 ausgebildet ist, und einen sich am radial äußeren Rand der Grundfläche 8 axial nach innen erstrecken Kragen 9 aufweisen, der sich in Umfangsrichtung vollständig um eine Rotationsachse 10 des Rotors 1 erstreckt.

Fig. 2 ist eine perspektivische Darstellung einzelner Komponenten des Rotors 1 gemäß dem ersten Ausführungsbeispiel.

Der Rotor 1 umfasst ferner eine Abschlussvorrichtung 11, die einen ringförmigen Körper 12, durch den sich die Welle 7 erstreckt, und mehrere radial nach außen vom Körper 12 abstehende Abschlusselemente 13 aufweist. Die Abschlusselemente 13 erstrecken sich insbesondere zwischen einem jeweiligen Rotorschenkel 3 und der diesen umwickelnden Erregerwicklung 4.

Optional weist der Rotor 1 acht Trennelemente 14 auf, von denen in Fig. 2 zwei Stück nicht dargestellt sind. Die Trennelemente 14 können keilförmig ausgebildet und zwischen einem jeweiligen Paar benachbarter Rotorschenkel 3 angeordnet sein. Die Trennelemente 14 erstrecken sich dabei bevorzugt vollständig in axialer Richtung zwischen entlang der Rotorschenkel 3 und sind darüber hinaus axial etwas weiter als die Erregerwicklungen 4 ausgebildet.

Schließlich sind in Fig. 2 auch bevorzugt vorgesehene Polschuhe 15 eines jeweiligen Rotorschenkels 3 dargestellt, die den äußeren Umfang des Rotors 1 definieren.

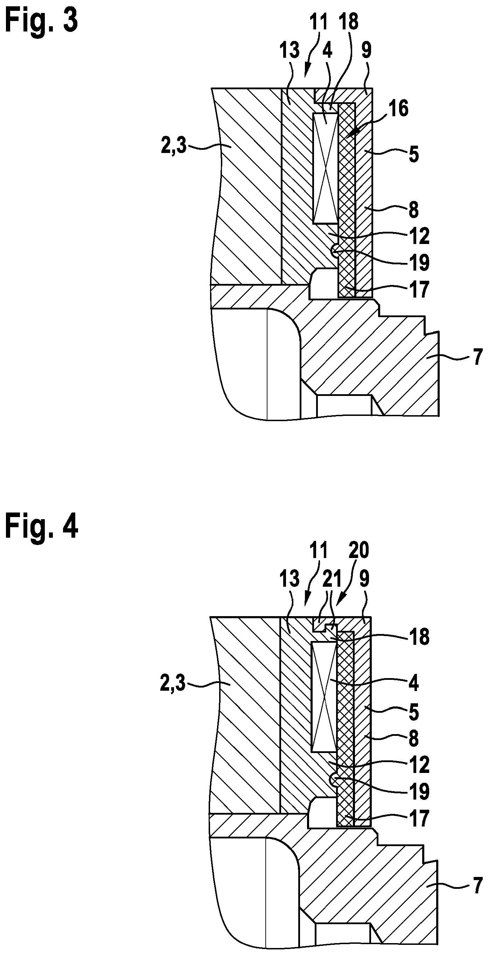

Fig. 3 ist eine geschnittene Detailansicht des ersten Ausführungsbeispiels im Bereich eines Zwischenraums 16 zwischen einer jeweiligen Erregerwicklung 4 und der Endkappe 5.

Der Zwischenraum 16 ist axial innen durch die Erregerwicklung 4 und das Abschlusselement 13, axial außen durch die Grundfläche 8 der Endkappe 5, radial außen durch den Kragen 9 der Endkappe 5 und radial innen durch die Welle 7 begrenzt. Im Zwischenraum 16 ist eine Vergussmasse 17 angeordnet, die aus einer ausgehärten Wärmeleitpaste gebildet ist. Die Wärmeleitpaste ist bevorzugt während der Herstellung des Rotors 1 zähflüssig, um sich einfach in den Zwischenraum 16 einführen zu lassen. Anschließend kann sie zur dargestellten Vergussmasse 17 aushärten. Durch die Vergussmasse 17 werden stirnseitige Enden der Erregerwicklungen 4, die sog. Wickelköpfe, mechanisch stabilisiert. Außerdem bildet die Vergussmasse 17 einen Wärmeübertragungspfad von den Wickelköpfen zur Welle 7 und einen weiteren Wärmeübertragungspfad von den Wickelköpfen über die Endkappe 5 zur Welle 7 aus, was die Entwärmung der Erregerwicklungen 4 und des Rotorkerns 2 verbessert.

In Umfangsrichtung sind die Zwischenräume 16 durch eine axial nach innen weisende Oberflächenkontur (nicht gezeigt) der Endkappe 5 begrenzt. Auf dieser Oberflächenkontur liegen die Trennelemente 14 auf, welche dadurch ebenfalls jeweils zwei Zwischenräume 16 in Umfangsrichtung einseitig begrenzen.

Wie aus Fig. 3 ferner ersichtlich ist, liegt die Endkappe 5 bzw. ihr Kragen 9 insbesondere radial außen auf einem Vorsprung 18 des Abschlusselements 13 auf kann und daran befestigt sein. Zusätzlich ist im ringförmigen Körper 12 eine Eintiefung 19, beispielsweise in Form von Bohrungen und/oder einer ringförmigen Nut, ausgebildet, in welche sich die Vergussmasse 17 ebenfalls hineinerstreckt, um die wirksame Wärmeaustauschfläche zu erhöhen.

Fig. 4 ist eine ist eine geschnittene Detailansicht eines zweiten Ausführungsbeispiels des Rotors 1 im Bereich des Zwischenraums 16 zwischen einer jeweiligen Erregerwicklung 4 und der Endkappe 5. Sofern nichts Abweichendes beschrieben wird, lassen sich alle Ausführungen zum ersten Ausführungsbeispiel auf dieses Ausführungsbeispiel übertragen. Gleiche oder gleichwirkenden Komponenten sind dabei mit identischen Bezugszeichen versehen.

Das zweite Ausführungsbeispiel zeichnen sich dadurch aus, dass die Endplatte 5 durch Rastelemente 20 an der Abschlussvorrichtung 11 befestigt ist. Dazu können am Kragen 9 und am Vorsprung 18 gegengleiche Rastnasen 21 ausgebildet sein, welche die Endplatte 5 kraftschlüssig an einem jeweiligen Abschlusselement 13 haltern.

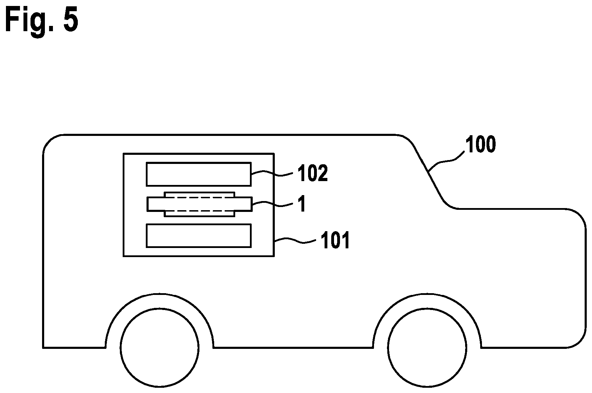

Fig. 5 ist eine Prinzipskizze eines Fahrzeugs 100, welches eine elektrische Maschine 101, die zum Antreiben des Fahrzeugs 100 eingerichtet ist, aufweist. Die elektrische Maschine 101 umfasst einen Stator 102 und einen drehbar innerhalb des Stators gelagerten Rotor 1 nach einem der zuvor beschrieben Ausführungsbeispiele. Die elektrische Maschine 101 kann als Elektromotor und als fremderregte Synchronmaschine ausgebildet sein.

## Patentansprüche

1. Rotor (1) für eine elektrische Maschine (101), aufweisend
- einen Rotorkern (2) mit einer Vielzahl von sich radial nach außen erstreckenden Rotorschenkeln (3),
- eine der Anzahl der Rotorschenkel (3) entsprechenden Anzahl von Erregerwicklungen (4), die jeweils um einen der Rotorschenkel (3) gewickelt sind,
- eine topfförmige Endkappe (5), die die Erregerwicklungen (4) stirnseitig abdeckt und eine Durchgangsöffnung (6) für eine Welle (7) aufweist,
wobei die Erregerwicklungen (4) und die Endkappe (5) Zwischenräume (16) begrenzen, in denen jeweils eine Vergussmasse (17) angeordnet ist, **dadurch gekennzeichnet, dass** der Rotor (1) aufweist:
- eine Abschlussvorrichtung (11), die stirnseitig am Rotorkern (2) angeordnet ist und Abschlusselemente (13) aufweist, die sich jeweils zwischen dem Rotorschenkel (3) und der Erregerwicklung (4) erstrecken, wobei die Abschlussvorrichtung (11) eine Oberflächenstruktur aufweist, die durch axiale Eintiefungen (19) ausgebildet ist, wobei sich die Vergussmasse (17) in die Eintiefungen (19) erstreckt, wobei die Abschlussvorrichtung (11) einen ringförmigen Körper (12) aufweist, der die Durchgangsöffnung (6) für die Welle (7) umschließt und von dem sich die Abschlusselemente (13) radial nach außen erstrecken, wobei die Oberflächenstruktur im ringförmigen Körper (12) ausgebildet ist.

2. Rotor nach Anspruch 1, wobei
- eine jeweilige Erregerwicklung (4) einen der Zwischenräume (16) axial innen begrenzt und/oder
- die Endkappe (5) einen jeweiligen Zwischenraum (16) axial außen begrenzt und/oder
- die Endkappe (5) einen jeweiligen Zwischenraum (16) radial außen begrenzt und/oder
- die Welle (7) einen jeweiligen Zwischenraum (16) radial innen begrenzt.

3. Rotor nach Anspruch 1 oder 2, wobei
die Vergussmasse (17) die Welle (7) thermisch leitfähig kontaktiert.

4. Rotor nach einem der vorhergehenden Ansprüche, wobei die Endkappe (5) rotorkernseitig eine Oberflächenkontur aufweist, die einen jeweiligen Zwischenraum (16) in Umfangsrichtung begrenzt.

5. Rotor nach einem der vorhergehenden Ansprüche, wobei die Endkappe (5) die Abschlussvorrichtung (11) radial außen übergreift.

6. Rotor nach Anspruch 5, wobei
die Endkappe (5) durch Rastelemente (20) an zumindest einem Teil der Abschlusselemente (13) befestigt ist.

7. Rotor nach einem der vorhergehenden Ansprüche, wobei
die Oberflächenstruktur durch eine Perforation und/oder eine in Umfangsrichtung verlaufende Nut ausgebildet ist.

8. Rotor nach einem der vorhergehenden Ansprüche, ferner aufweisend eine der Anzahl der Rotorschenkel (3) entsprechende Anzahl von Trennelementen (14), die jeweils zwischen benachbarten Paaren von Rotorschenkeln (3) angeordnet sind.

9. Rotor nach Anspruch 8 wobei ein jeweiliges Trennelement (14) zwei benachbarte Zwischenräume (16) jeweils in Umfangsrichtung einseitig begrenzt und/oder auf der Endkappe (5) aufliegt.

10. Rotor nach einem der vorhergehenden Ansprüche, wobei die Vergussmasse (17) eine ausgehärtete Wärmeleitpaste ist.

11. Elektrische Maschine (101) für ein Fahrzeug (100), aufweisend einen Stator (102) und einen drehbar innerhalb des Stators (102) gelagerten Rotor (1) nach einem der vorhergehenden Ansprüche.

12. Verfahren zur Herstellung eines Rotors (1) für eine elektrische Maschine (101) nach einem der Ansprüche 1 bis 10, aufweisend folgende Schritte:
- Bereitstellen eines Rotorkerns (2) mit einer Vielzahl von sich radial nach außen erstreckenden Rotorschenkeln (3), um die eine der Anzahl der Rotorschenkel (3) entsprechenden Anzahl von Erregerwicklungen (4) gewickelt ist, einer topfförmigen Endkappe (5), die die Erregerwicklungen (4) stirnseitig abdeckt und eine Durchgangsöffnung (6) für eine Welle (7) aufweist, wobei die Erregerwicklungen (4) und die Endkappe (5) Zwischenräume (16) begrenzen, und einer Abschlussvorrichtung (11), die stirnseitig am Rotorkern (2) angeordnet ist und Abschlusselemente (13) aufweist, die sich jeweils zwischen dem Rotorschenkel (3) und der Erregerwicklung (4) erstrecken, wobei die Abschlussvorrichtung (11) eine Oberflächenstruktur aufweist, die durch axiale Eintiefungen (19) ausgebildet ist, wobei die Abschlussvorrichtung (11) einen ringförmigen Körper (12) aufweist, der die Durchgangsöffnung (6) für die Welle (7) umschließt und von dem sich die Abschlusselemente (13) radial nach außen erstrecken, wobei die Oberflächenstruktur im ringförmigen Körper (12) ausgebildet ist;
- Befüllen der Zwischenräume (16) mit einer Vergussmasse (17), die vorzugsweise eine Wärmeleitpaste ist und/oder eine dynamische Viskosität von wenigstens 0,1 Pa·s, insbesondere wenigstens 1 Pa·s, aufweist, so dass sich die Vergussmasse (17) in die Eintiefungen (19) erstreckt; und
- Aushärten der Vergussmasse (17).

## Claims

1. Rotor (1) for an electric machine (101), comprising:
- a rotor core (2) having a plurality of rotor arms (3) extending radially outward,
- a number of field windings (4) corresponding to the number of rotor arms (3), each of which is wound around one of the rotor arms (3),
- a pot-shaped end cap (5) which covers the field windings (4) on the end face and has a through-opening (6) for a shaft (7), wherein the field windings (4) and the end cap (5) delimit intermediate spaces (16) in each of which a potting compound (17) is arranged,
**characterized in that** the rotor (1) comprises:
- a termination device (11) which is arranged on the end face of the rotor core (2) and has termination elements (13) which each extend between the rotor arm (3) and the field winding (4), wherein the termination device (11) has a surface structure formed by axial recesses (19), wherein the potting compound (17) extends into the recesses (19), wherein the termination device (11) has an annular body (12) which encloses the through-opening (6) for the shaft (7) and from which the termination elements (13) extend radially outward, wherein the surface structure is formed in the annular body (12).

2. Rotor according to claim 1, wherein:
- a respective field winding (4) delimits one of the intermediate spaces (16) axially on the inside, and/or
- the end cap (5) delimits a respective intermediate space (16) axially on the outside, and/or
- the end cap (5) delimits a respective intermediate space (16) radially on the outside, and/or
- the shaft (7) delimits a respective intermediate space (16) radially on the inside.

3. Rotor according to claim 1 or 2, wherein the potting compound (17) makes thermally conductive contact with the shaft (7).

4. Rotor according to any one of the preceding claims, wherein the end cap (5) has a surface contour on the rotor core side which delimits a respective intermediate space (16) in the circumferential direction.

5. Rotor according to any one of the preceding claims, wherein the end cap (5) overlaps the termination device (11) radially on the outside.

6. Rotor according to claim 5, wherein the end cap (5) is fastened to at least a portion of the termination elements (13) by means of latching elements (20).

7. Rotor according to any one of the preceding claims, wherein the surface structure is formed by a perforation and/or a groove extending in the circumferential direction.

8. Rotor according to any one of the preceding claims, further comprising: a number of separating elements (14) corresponding to the number of rotor arms (3), which are each arranged between adjacent pairs of rotor arms (3).

9. Rotor according to claim 8, wherein a respective separating element (14) delimits two adjacent intermediate spaces (16) on one side in each case in the circumferential direction and/or rests on the end cap (5).

10. Rotor according to any one of the preceding claims, wherein the potting compound (17) is a cured thermal paste.

11. Electric machine (101) for a vehicle (100), comprising a stator (102) and a rotor (1) according to any one of the preceding claims rotatably mounted within the stator (102).

12. Method for producing a rotor (1) for an electric machine (101) according to any one of claims 1 to 10, comprising the following steps:
- providing a rotor core (2) with a plurality of radially outwardly extending rotor arms (3) around which a number of field windings (4) corresponding to the number of rotor arms (3) is wound; a pot-shaped end cap (5) which covers the field windings (4) on the end face and has a through-opening (6) for a shaft (7), wherein the field windings (4) and the end cap (5) delimit intermediate spaces (16); and a termination device (11) which is arranged on the end face of the rotor core (2) and has termination elements (13) which each extend between the rotor arm (3) and the field winding (4), wherein the termination device (11) has a surface structure formed by axial recesses (19), wherein the termination device (11) has an annular body (12) which encloses the through-opening (6) for the shaft (7) and from which the termination elements (13) extend radially outward, wherein the surface structure is formed in the annular body (12);
- filling the intermediate spaces (16) with a potting compound (17), which is preferably a thermal paste and/or has a dynamic viscosity of at least 0.1 Pa·s, in particular at least 1 Pa·s, such that the potting compound (17) extends into the recesses (19); and
- curing the potting compound (17).

## Revendications

1. Rotor (1) pour une machine électrique (101), comprenant :
- un noyau de rotor (2) présentant une pluralité de bras de rotor (3) s'étendant radialement vers l'extérieur,
- un nombre d'enroulements d'excitation (4) correspondant au nombre de bras de rotor (3), chacun étant enroulé autour de l'un des bras de rotor (3),
- un capot d'extrémité (5) en forme de pot qui recouvre les enroulements d'excitation (4) côté frontal et présente une ouverture de passage (6) pour un arbre (7), dans lequel les enroulements d'excitation (4) et le capot d'extrémité (5) délimitent des espaces intermédiaires (16) dans chacun desquels est disposée une matière de coulée (17),
**caractérisé en ce que** le rotor (1) comprend :
- un dispositif de terminaison (11) qui est disposé sur le côté frontal du noyau de rotor (2) et présente des éléments de terminaison (13) qui s'étendent chacun entre le bras de rotor (3) et l'enroulement d'excitation (4), dans lequel le dispositif de terminaison (11) présente une structure de surface formée par des évidements axiaux (19), dans lequel la matière de coulée (17) s'étend dans les évidements (19), dans lequel le dispositif de terminaison (11) présente un corps annulaire (12) qui entoure l'ouverture de passage (6) pour l'arbre (7) et à partir duquel les éléments de terminaison (13) s'étendent radialement vers l'extérieur, dans lequel la structure de surface est formée dans le corps annulaire (12).

2. Rotor selon la revendication 1, dans lequel :
- un enroulement d'excitation (4) respectif délimite l'un des espaces intermédiaires (16) axialement vers l'intérieur, et/ou
- le capot d'extrémité (5) délimite un espace intermédiaire (16) respectif axialement vers l'extérieur, et/ou
- le capot d'extrémité (5) délimite un espace intermédiaire (16) respectif radialement vers l'extérieur, et/ou
- l'arbre (7) délimite un espace intermédiaire (16) respectif radialement vers l'intérieur.

3. Rotor selon la revendication 1 ou 2, dans lequel la matière de coulée (17) est en contact thermiquement conducteur avec l'arbre (7).

4. Rotor selon l'une quelconque des revendications précédentes, dans lequel le capot d'extrémité (5) présente, du côté du noyau de rotor, un contour de surface qui délimite un espace intermédiaire (16) respectif dans la direction circonférentielle.

5. Rotor selon l'une quelconque des revendications précédentes, dans lequel le capot d'extrémité (5) recouvre le dispositif de terminaison (11) radialement vers l'extérieur.

6. Rotor selon la revendication 5, dans lequel le capot d'extrémité (5) est fixé à au moins une partie des éléments de terminaison (13) par des éléments d'encliquetage (20).

7. Rotor selon l'une quelconque des revendications précédentes, dans lequel la structure de surface est formée par une perforation et/ou une rainure s'étendant dans la direction circonférentielle.

8. Rotor selon l'une quelconque des revendications précédentes, comprenant en outre : un nombre d'éléments de séparation (14) correspondant au nombre de bras de rotor (3), qui sont disposés chacun entre des paires adjacentes de bras de rotor (3).

9. Rotor selon la revendication 8, dans lequel un élément de séparation (14) respectif délimite deux espaces intermédiaires (16) adjacents chacun d'un côté dans la direction circonférentielle et/ou repose sur le capot d'extrémité (5).

10. Rotor selon l'une quelconque des revendications précédentes, dans lequel la matière de coulée (17) est une pâte thermique durcie.

11. Machine électrique (101) pour un véhicule (100), comprenant un stator (102) et un rotor (1) selon l'une quelconque des revendications précédentes, monté de manière rotative à l'intérieur du stator (102).

12. Procédé de fabrication d'un rotor (1) pour une machine électrique (101) selon l'une quelconque des revendications 1 à 10, comprenant les étapes suivantes :
- fourniture d'un noyau de rotor (2) avec une pluralité de bras de rotor (3) s'étendant radialement vers l'extérieur, autour desquels est enroulé un nombre d'enroulements d'excitation (4) correspondant au nombre de bras de rotor (3) ; d'un capot d'extrémité (5) en forme de pot qui recouvre les enroulements d'excitation (4) côté frontal et présente une ouverture de passage (6) pour un arbre (7), dans lequel les enroulements d'excitation (4) et le capot d'extrémité (5) délimitent des espaces intermédiaires (16) ; et d'un dispositif de terminaison (11) qui est disposé sur le côté frontal du noyau de rotor (2) et présente des éléments de terminaison (13) qui s'étendent chacun entre le bras de rotor (3) et l'enroulement d'excitation (4), dans lequel le dispositif de terminaison (11) présente une structure de surface formée par des évidements axiaux (19), dans lequel le dispositif de terminaison (11) présente un corps annulaire (12) qui entoure l'ouverture de passage (6) pour l'arbre (7) et à partir duquel les éléments de terminaison (13) s'étendent radialement vers l'extérieur, dans lequel la structure de surface est formée dans le corps annulaire (12) ;
- remplissage des espaces intermédiaires (16) avec une matière de coulée (17), qui est de préférence une pâte thermique et/ou présente une viscosité dynamique d'au moins 0,1 Pa·s, en particulier d'au moins 1 Pa·s, de sorte que la matière de coulée (17) s'étende dans les évidements (19) ; et
- durcissement de la matière de coulée (17).
